Europäisches Patentamt

European Patent Office

Office européen des brevets

(11) Veröffentlichungsnummer: **0 185 189**
**A2**

# (12) EUROPÄISCHE PATENTANMELDUNG

(21) Anmeldenummer: **85114236.4**

(22) Anmeldetag: **08.11.85**

(51) Int. Cl.⁴: **G 02 B 5/28**

(30) Priorität: **16.11.84 DE 3441948**

(43) Veröffentlichungstag der Anmeldung:
**25.06.86 Patentblatt 86/26**

(84) Benannte Vertragsstaaten:
**DE FR GB IT**

(71) Anmelder: **BAYER AG**
**Konzernverwaltung RP Patentabteilung**
**D-5090 Leverkusen 1 Bayerwerk(DE)**

(72) Erfinder: **Wank, Joachim, Dipl.-Ing.**
**Zülpicher Strasse 7**
**D-4047 Dormagen 5(DE)**

(72) Erfinder: **Hell, August, Dr.**
**Am Berg 19**
**D-8152 Feldkirchen(DE)**

(54) **Antireflex beschichtete, transparente Abdeckung von Zeichen, insbesondere für Anzeigegeräte.**

(57) Als Antireflexbelag wird auf einer transparenten Abdeckung (1) von Anzeigegeräten eine Schicht (2) aus einer hochbrechenden Substanz mit einer optischen Dicke von $\tau_1 \cdot 1/8$ und eine Schicht (3) aus niedrigbrechender Substanz und einer optischen Dicke von $\tau_1 \cdot 1/8$ sowie eine Schicht (4) aus einer hochbrechenden Substanz mit einer optischen Dicke aus $\tau_2 \cdot 1/2$ und eine Schicht (5) aus niedrigbrechender Substanz mit einer optischen Dicke von $\tau_2 \cdot 1/4$ angeordnet, wobei die Wellenlänge $\tau_1$ und $\tau_2$ im Verhältnis 1:5 bis 1:3 stehen.

| | |
|---|---|
| $Si\,O_2$ | 5 |
| $Ti\,O_2$ | 4 |
| $Si\,O_2$ | 3 |
| $Ti\,O_2$ | 2 |
| Polycarbonat | 1 |
| $Ti\,O_2$ | 6 |
| $Si\,O_2$ | 7 |
| $Ti\,O_2$ | 8 |
| $Si\,O_2$ | 9 |

FIG. 1

EP 0 185 189 A2

BAYER AKTIENGESELLSCHAFT    5090 Leverkusen, Bayerwerk
Konzernverwaltung RP
Patentabteilung             Kr/ABc


Antireflex beschichtete, transparente Abdeckung von
Zeichen, insbesondere für Anzeigegeräte

---

Die Erfindung betrifft eine antireflex beschichtete
transparente Abdeckung von Zeichen, insbesondere für
Anzeigegeräte, bestehend aus einem Trägermaterial und
einem Antireflexbelag.

Empfindliche Gegenstände, insbesondere Instrumente,
werden zur Vermeidung von Verschmutzungen und mechanische Beschädigungen durch transparente Scheiben abgedeckt, die bei bestimmten Lichteinfall infolge der
Spiegelung oft eine einwandfreie Ablesung nicht mehr
zulassen.

Um solche störenden Reflexionen zu vermeiden, würde
z.B. die Oberfläche der transparenten Abdeckungen mattiert. Diese Aufrauhung ist aber nur dann anwendbar, wenn
die anzuzeigenden Zeichen unmittelbar hinter der Scheibe
liegen, denn mit dem Abstand der Zeichen von der Abdeckung nimmt die Schärfe und damit die Lesbarkeit ab.

Le A 23 298-EP

Bei Kraftfahrzeug-Anzeigeinstrumenten werden auch gewölbte Abdeckscheiben, beispielsweise aus Polymethylacrylat, verwendet. Die Krümung ist so angelegt, daß das Auge des Fahrers sich annähernd im Brennpunkt befindet. Durch individuelle Einstellung des Sitzes trifft dieses aber oft nicht zu, so daß insbesondere bei stark wechselnden Lichtverhältnissen die Ablesegenauigkeit und damit die Sicherheit leidet. Ferner erfordern gekrümmte Abdeckscheiben größere Bautiefen, was eine oft gewünschte Kompaktbauweise erschwert.

Aufgabe der Erfindung ist es, eine reflexionsarme, oberflächenunempfindliche, geschlossene Abdeckung mit geringer Bautiefe zu finden, die eine konturenscharfe Wiedergabe der dahinterliegenden Zeichen und Bilder auch bei stark wechselnden Lichtverhältnisse aus einem breiten Spektrum von Betrachtungspunkten erlaubt.

Die Aufgabe wird erfindungsgemäß dadurch gelöst, daß als Antireflexbelag mindestens auf einer Seite des Trägermaterials nacheinander eine Schicht aus einer hochbrechenden Substanz mit einer optischen Dicke von $\lambda_1 \cdot 1/8$ und eine Schicht aus einer niedrigbrechenden Substanz mit einer optischen Dicke von $\lambda_1 \cdot 1/8$, sowie eine Schicht aus einer hochbrechenden Substanz mit einer optischen Dicke $\lambda_2 \cdot 1/2$ und eine Schicht aus einer niedrigbrechenden Substanz mit einer optischen Dicke $\lambda_2 \cdot 1/4$ angeordnet wird, wobei die Wellenlänge $\lambda_1$ und $\lambda_2$ im Verhältnis 1:1,3 bis 1:3, insbesondere 1:1,5 - 1:1,9, stehen.

Für den Fachmann ist überraschend, daß bei dem Aufbringen der Schichten im Vakuum unter reaktiven, oxidieren-

Le A 23 298

den Bedingungen aus z.B. $Ti_2O_3$; $SiO_2$ in der obengenannten Reihenfolge, eine weitgehend spiegelfreie, konturenscharfe Sicht auf die Zeichen hinter der transparenten Folie zu erreichen ist.

Für den Anwendungsfall der Sichtschirmentspiegelung, die sowohl der Kontrastverstärkung als auch der Störreflexbeseitigung dient, wird zur Entspiegelungoptimierung ein Einfallswinkel I = 13 ± 3°, das ist ein Winkel zwischen Lot auf Spiegelfläche und einfallendem Lichtstrahl, gewählt. Dies hat den Vorteil, daß auch noch bei seitlicher Aufsicht eine befriedigende Reflexbeseitigung erzielt wird.

Ein weiterer Vorzug besteht darin, daß die Abdeckung nur eine geringe Bautiefe besitzt, so daß sie auch bei konstruktiv engen Verhältnissen noch eingesetzt werden kann.

In einer besonderen Ausführungsform liegt $\lambda_1$ in oder direkt unter dem kurzwelligen Endbereich und $\lambda_2$ im mittleren (von 40 bis 60 %) bzw. langwelligen Endbereich des bei der Entspiegelung zu berücksichtigenden Gesamtspektralbereiches.

Gute Ergebnisse werden erzielt, wenn die Wellenlänge $\lambda_1$ im Bereich von 275-450 nm und die Wellenlänge $\lambda_2$ im Bereich von 500-850 nm liegt.

In einer anderen Ausführungsform sind auf den gegenüberliegenden Seiten des Trägermaterials Antireflexbeläge mit unterschiedlichen Wellenlängen bzw. Wellenlängen-Verhältnisse $\lambda_{1i}/\lambda_{2i}$ bzw. $\lambda_{1j}/\lambda_{2j}$ angeordnet.

Le A 23 298

Bei Anordnung von Antireflexbelängen, deren optische Schichtdicken zu beiden Seiten der durchsichtigen Folie unterschiedliche Wellenlängen $\lambda_{1i}$ und $\lambda_{2i}$ bzw. $\lambda_{1j}$ und $\lambda_{2j}$ entsprechen, kann die Entspiegelung noch neutraler gestaltet werden. Gleichzeitig können die Wellenlängen $\lambda_{1i}$ und $\lambda_{2i}$ bzw. $\lambda_{1j}$ und $\lambda_{2j}$ näher zusammenrücken, um einen besonders störenden, engeren Spektralbereich besonders optimal zu entspiegeln.

In einer weiteren Ausführungsform besteht die hochbrechende dielektrische Substanz aus $TiO_2$ und die niedrigbrechende dielektrische Substanz aus $SiO_2$.

Diese Substanzen, die auch durch reaktives Aufdampfen von $Ti_2O_3$ bzw. SiO entstehen können, haben sich bewährt und zeichnen sich durch gute Kratzfestigkeit aus. Denkbar sind aber auch Kombination mit $MgF_2$ und $Ta_2O_5$. Bei beidseitiger Entspiegelung können auch unterschiedliche Materialkombinationen an den beiden Seiten des Trägermaterials verwendet werden.

In einer Ausführungsform wird als Trägermaterial eine Polycarbonat Folie verwendet.

Diese Folie besitzt eine große Lichtdurchlässigkeit und hohe Festigkeit.

Als erfindungsgemäß zu stabilisierende Polycarbonate kommen die durch Umsetzung von Diphenolen, insbesondere von Dihydroxydiarylalkanen, mit Phosgen oder Diestern der Kohlensäure erhältlichen Polykondensate in Betracht, wobei außer den unsubstituierten Dihydroxydiarylalkanen auch solche geeignet sind, deren Arylreste in o- und/ oder m-Stellung zur Hydroxylgruppe Methylgruppen oder Halogenatome tragen. Ebenso sind verzweigte Polycarbonate geeignet.

Le A 23 298

Die zu stabilisierenden Polycarbonate haben mittlere Ge-
wichtsmittel-Molekulargewichte $\overline{M}w$ zwischen 10 000 und
100 000, vorzugsweise zwischen 20 000 und 40 000, ermittelt durch Messungen der rel. Viskosität in $CH_2Cl_2$
bei 25°C und einer Konzentration von 0,5 g pro 100 ml.

Geeignete Diphenole sind z.B. Hydrochinon, Resorcin,
4,4'-Dihydroxydiphenyl, Bis-(hydroxy-phenyl)alkane wie
beispielsweise $C_1$-$C_8$-Alkylen- bzw. $C_2$-$C_8$-Alkylidenbis-
phenole, Bis-(hydroxyphenyl)-cycloalkane wie beispielsweise $C_5$-$C_{15}$-Cycloalkylen- bzw. $C_5$-$C_{15}$-Cycloalkyliden-
bisphenole, Bis-(hydroxy-phenyl)-sulfide, -ether, -ketone,
-sulfoxide oder -sulfone. Ferner $\alpha$ , $\alpha$'-Bis-(hydroxy-
phenyl)-diisopropylbenzol sowie die entsprechenden kernalkylierten bzw. kernhalogenierten Verbindungen. Bevorzugt sind Polycarbonate auf Basis Bis-(4-hydroxy-phenyl)-
propan-2.2 (Bisphenol A), Bis-(4-hydroxy-3,5-dichlorphenyl)-propan-2.2 (Tetrachlorbisphenol A), Bis-(4-hy-
droxy-3,5-dibromphenyl)-propan-2.2 (Tetrabrombisphenol A),
Bis-(4-hydroxy-3,5-dimethyl-phenyl)-propan-2.2 (Tetramethylbisphenol A), Bis-(4-hydroxy-phenyl)-cyclohexan-1.1
(Bisphenol Z) sowie auf Basis von Dreikernbisphenolen
wie $\alpha$ , $\alpha$'-Bis-(4-hydroxyphenyl)-p-diisopropylbenzol.

Ein Beispiel der Erfindung ist in den Zeichnungen dargestellt und wird nachstehend näher erläutert

    Fig. 1        Schichtaufbau
    Fig. 2        Diagramm

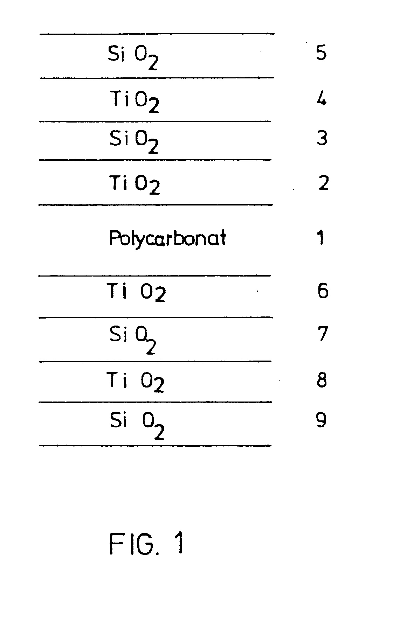

In Fig. 1 ist eine Trägerfolie 1 aus Polycarbonat dargestellt auf die durch Bedampfen nacheinander folgende
Schichten mit mechanischen Dicken $TiO_2$14 nm (2), $SiO_2$25
nm (3), $TiO_2$ 134 nm (4) und $SiO_2$105 nm (5) aufgetragen
sind, wobei als Wellenlängen $\lambda_1$ = 315 nm und $\lambda_2$ =
613 nm bzw. als Verhältnis $\lambda_1/\lambda_2$ = 1,9 gewählt wurden.

Dieses Antireflexsystem läßt sich mit einem weiteren
Antireflexsystem auf der anderen Seite der Folie mit
Schichten $TiO_2$16 nm (6), $SiO_2$30 nm (7), $TiO_2$119 nm (8)
und $SiO_2$91 nm (9) ergänzen, wobei Maxima der Restreflexion von der einen Seite mit Minima von der anderen
Seite zusammenfallen.

Eine im langwellig-sichtbaren und nahinfraroten Bereich
gelegene Entspiegelung ergibt sich mit $TiO_2$ 22 nm,
$SiO_2$ 37 nm, $TiO_2$ 161 nm und $SiO_2$ 121 nm mit Wellenlängen $\lambda_1$ = 435 nm und $\lambda_2$ = 710 nm.

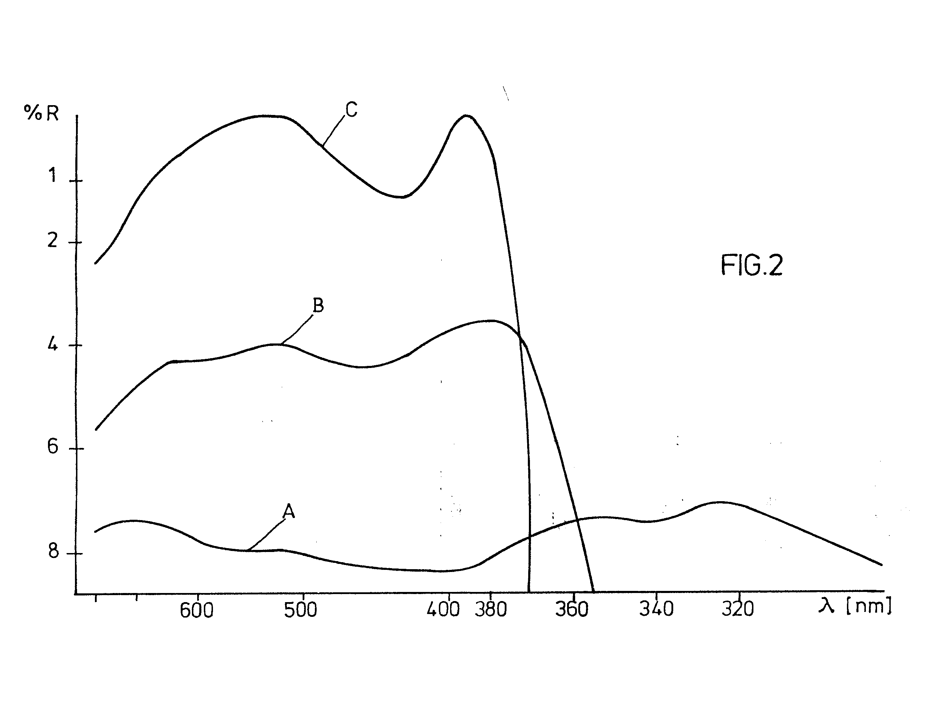

In Fig. 2 ist ein Diagramm dargestellt bei dem auf der
Abzisse die Wellenlänge $\lambda$ und auf der Ordinate der Reflexionsgrad R angegeben ist. Die Kurve A zeigt die
Reflexion an einer unbeschichteten Folie. Die Kurve B
gibt die Reflexion einer einseitig beschichteten Folie
wieder. Die Kurve C stellt die Reflexion an einer beidseitig beschichteten Folie dar. Als Ergebnis kann vermerkt werden, daß die Reflexion im sichtbaren Bereich
bis zu einer Wellenlänge von 390 nm wesentlich reduziert
wird.

Le A 23 298

## Beispiel 1

Eine 600 µm dicke glasklare Folie aus Polycarbonat wird nach dem erfindungsgemäßen Verfahren beidseitig so bedampft, daß zuerst eine $\lambda_1 \cdot$ 1/8 optische Schicht von $TiO_2$, dann eine $\lambda_1 \cdot$ 1/8 optische Schicht von $SiO_2$ aufgebracht wird. Im Anschluß daran folgt eine $\lambda_2 \cdot$ 1/2 optische Schicht von $TiO_2$ und eine $\lambda_2 \cdot$ 1/4 optische Schicht von $SiO_2$.

Die Aufbringung der einzelnen Schichten erfolgt zum Beispiel in einer Bandbedampfungsanlage mit je 4 zu beiden Seiten der Folie angeordneten Verdampfern.

Die so erhaltene beidseitig antireflektiv beschichtete Folie wird als Abdeckung für das Anzeigeinstrument eines Personenkraftwagens, in dessen Gehäuse sich vier verschiedene Einzelinstrumente befinden, verwendet. Der Abstand zwischen Folie und den Zeigern beträgt 1 cm. Die Fixierung der Folie mit dem Gehäuse geschieht in der Weise, daß der äußere Rand Bohrungen mit 3 mm Ø die im Abstand von 100 mm angebracht sind, aufweist. Die Folie, die bündig mit dem äußeren Rand abschließt, hat an der gleichen Stelle entsprechende Durchbrüche. Als Abschluß wird ein 10 mm breiter Rahmen mit einer Wanddicke von 4 mm verwendet, der so mit Stiften versehen ist, daß diese in die vorhandenen Bohrungen des Gehäuseunterteils passen. Durch Vernieten des Abdeckrahmens mit dem Gehäuseunterteil ist die antireflektivbeschichtete Folie zwischen Gehäuse und Abdeckrahmen eingeklemmt. Dieses Anzeigeinstrument hat im Vergleich zu der bisherigen Abdeckung mit der gekrümmten Scheibe eine um 100 mm reduzierte Bautiefe.

Le A 23 298

Beispiel 2

Abdeckung eines Kombiinstrumentes eine PKW's entsprechend
Beispiel 1, wobei die Folie mit dem Gehäuseunterteil
durch Verkleben mit einem Epoxidharz verbunden wird.

Beispiel 3

Auf eine plane Platte aus Polymethacrylat der Dicke
3 mm wird eine einseitig gemäß Beispiel 1 antireflektiv
beschichtete 100 µm dicke Folie aus Polycarbonat so aufkaschiert, daß auf die Platte aus PMMA ein UV-härtbares
Harz auf Acrylatbasis aufgebracht wird. Die Folie wird
mit der nicht beschichteten Seite so aufgelegt, daß
keine Luft zwischen Folie und Harz eingeschlossen wird.
Anschließend wird der Kleber durch Bestrahlung mit UV-
Licht angehärtet. Die selbsttragende Platte kann auf das
erforderliche Maß zugeschnitten und in das Gehäuse
eines Anzeigegerätes eingeklipst werden.

Beispiel 4

Entsprechend Beispiel 3, jedoch daß die Platte aus PMMA
beidseitig mit einer einseitig antireflektiv beschichteten Folie aus Polycarbonat kaschiert wird.

Beispiel 5

Eine 100 µm dicke Folie aus Polycarbonat wird gemäß
Beispiel 1 einseitig so beschichtet, daß als niedrigbrechende Substanz $SiO_2$, und als hochbrechende Substanz
$TiO_2$ verwendet wird.

Le A 23 298

Diese einseitig antireflektiv beschichtete Folie aus Polycarbonat wird in die Formhöhlung eines Spritzgußwerkzeuges so eingelegt, daß die antireflektiv beschichtete Seite zur Formaußenwand zeigt. Die Folie wird in an sich bekannter Weise mit einem transparenten Kunststoff s. B. Polycarbonat hinterspritzt.

Patentansprüche

1. Antireflex beschichtete transparente Abdeckung von Zeichen, insbesondere für Anzeigegeräte, bestehend aus einem Trägermaterial und einem Antireflexbelag, dadurch gekennzeichnet, daß als Antireflexbelag mindestens auf einer Seite des Trägermaterials eine Schicht aus einer hochbrechenden Substanz mit einer Dicke von $\frac{\lambda_1}{5}$ und eine Schicht aus niedrigbrechender Substanz und einer Dicke von $\frac{\lambda_1}{8}$ sowie eine Schicht aus einer hochbrechenden Substanz mit einer Dicke aus $\frac{\lambda_2}{2}$ und eine Schicht aus niedrigbrechender Substanz mit einer Dicke von $\frac{\lambda_2}{4}$ angeordnet sind, wobei die Wellenlänge $\lambda_1$ und $\lambda_2$ im Verhältnis 1:1,3 bis 1:3 stehen.

2. Antireflex beschichtete transparente Abdeckung nach Anspruch 1, dadurch gekennzeichnet, daß $\lambda_1$ im oder direkt unter dem kurzwelligen Endbereich und $\lambda_2$ im mittleren (40 - 60 % des Gesamtbereiches) bzw. langwelligen Endbereich des bei der Entspiegelung zu berücksichtigenden Gesamtspektralbereiches liegt.

3. Antireflex beschichtete transparente Abdeckung nach Anspruch 1 - 2, dadurch gekennzeichnet, daß auf den gegenüberliegenden Seiten des Trägermaterials Antireflexbeläge mit unterschiedlichen Wellenlängen bzw. Wellenlängen-Verhältnisse $\lambda_{1i}/\lambda_{2i}$ bzw. $\lambda_{1j}/\lambda_{2j}$ angeordnet sind.

4. Antireflex beschichtete transparente Abdeckung nach Anspruch 1 - 3, dadurch gekennzeichnet, daß die hochbrechende dielektrische Substanz aus $TiO_2$ und die niedrigbrechende dielektrische Substanz aus $SiO_2$ besteht.

Le A 23 298

5.  Antireflex beschichtete transparente Abdeckung nach
    Ansprüchen 1-4, dadurch gekennzeichnet, daß als
    Trägermaterial eine Polycarbonat-Folie verwendet
    wird.

Le A 23 298

| | |
|---|---|
| Si O$_2$ | 5 |
| Ti O$_2$ | 4 |
| Si O$_2$ | 3 |
| Ti O$_2$ | 2 |
| Polycarbonat | 1 |
| Ti O$_2$ | 6 |
| Si O$_2$ | 7 |
| Ti O$_2$ | 8 |
| Si O$_2$ | 9 |

FIG. 1

Le A 23 298

FIG.2

LeA 23298